# EUROPÄISCHE PATENTSCHRIFT

(11) **EP 1 572 495 B1**
(45) Veröffentlichungstag und Bekanntmachung des Hinweises auf die Patenterteilung: **25.10.2006**
(21) Anmeldenummer: 03812122.4
(22) Anmeldetag: 18.07.2003
(51) Int. Cl.: B60P 1/52, B64F 1/32, B65G 13/06

(54) **VORFELD-FAHRZEUG MIT SCHNECKENANTRIEB**
APRON VEHICLE COMPRISING A WORM GEAR UNIT
VEHICULE D'AIRE DE STATIONNEMENT POURVU D'UN DISPOSITIF D'ENTRAINEMENT A VIS SANS FIN

(30) Priorität: 04.12.2002 DE 20218753 U
(43) Veröffentlichungstag der Anmeldung: 14.09.2005
(73) Patentinhaber: Windhoff Vammas Airport Equipment GmbH, 48485 Neuenkirchen (DE)
(72) Erfinder: MAATZ, Rudolf, 49477 Ibbenbüren (DE)
(74) Vertreter: Habbel, Ludwig
(86) Internationale Anmeldenummer: PCT/DE2003/002419
(87) Internationale Veröffentlichungsnummer: WO 2004/050420

(56) Entgegenhaltungen:
- DE-A- 3 416 563
- DE-A- 19 860 703
- US-A- 1 386 053
- US-A- 1 444 672
- US-A- 2 156 438
- US-A- 5 011 004
- PATENT ABSTRACTS OF JAPAN vol. 008, no. 249 (M-338), 15. November 1984 (1984-11-15) & JP 59 124607 A (KEIICHI KURODA;OTHERS: 01), 18. Juli 1984 (1984-07-18)

## Beschreibung

Die Erfindung betrifft ein Vorfeld-Fahrzeug nach dem Oberbegriff des Anspruchs 1.

Derartige Vorfeld-Fahrzeuge sind aus der Praxis bekannt. Sie dienen dazu, den Höhenunterschied zwischen Vorfeld und Flugzeug zu überbrücken, sodass Güter aus dem Flugzeug entladen bzw. in das Flugzeug eingeladen werden können, oder dazu, die Güter über das Vorfeld zu transportieren, also im Wesentlichen horizontale Strecken zurückzulegen.

Bei den vorgenannten Vorfeld-Fahrzeugen ist stets vorgesehen, dass - zum Teil aufgrund der Schwere der zu transportierenden Güter - diese Güter nicht vom Vorfeld-Fahrzeug angehoben bzw. von oben auf dieses abgesetzt werden, sondern dass die Güter horizontal auf das Vorfeld-Fahrzeug aufgeschoben werden bzw. horizontal vom Vorfeld-Fahrzeug weggeschoben werden. Zu diesem Zweck weisen die Vorfeld-Fahrzeuge einen Rollengang als Förderbahn für die Güter auf. Bei nicht motorisch angetriebenen Förderbahnen erleichtern die Rollen die Schiebebewegung der Güter, beispielsweise auf den sogenannten Dollies. Bei motorisch angetriebenen Förderbahnen ist zumindest eine, üblicherweise jedoch mehrere der Rollen motorisch angetrieben.

Als Antriebsmittel für die Rollen werden in der Praxis Ketten verwendet. Dabei ist zur Überbrückung längerer Strecken, also bei entsprechend lang ausgestalteten Rollengängen, die Anordnung mehrerer Ketten erforderlich und eine dementsprechend große Anzahl von Zahnrädern, sodass bei der Herstellung des Rollengangs ein vergleichsweise großer Montageaufwand notwendig ist. Da sich die Ketten im Betrieb längen, ist entweder wendig ist. Da sich die Ketten im Betrieb längen, ist entweder ein konstruktiver Aufwand erforderlich, beispielsweise in Form von Kettenspannern, oder ein erheblicher Wartungsaufwand, um die Ketten zu pflegen. Ohnehin müssen die Ketten zur Verlängerung der Lebensdauer von Verschmutzungen gesäubert und geschmiert werden. Trotz dieser vorgenannten wirtschaftlichen Nachteile bei Konstruktion und Unterhaltung der Rollengänge haben sich die Kettenantriebe international durchgesetzt.

Aus der US 2 156 438 A, der US 1 444 672 A sowie der US 1 386 053 A sind jeweils Lkw-Fahrzeuge bekannt, die beispielsweise zum Transport von Holz dienen und die zum Be- und Entladen Rollengänge aufweisen, die mittels fester Getriebemittel angetriebene Rollen aufweisen. Eine derartige Konstruktion ist aus dem Bereich von Vorfeld-Fahrzeugen unbekannt, hier kommt insbesondere das Problem hinzu, dass die zu transportierenden Lasten häufig angehoben werden müssen und dass dementsprechend die angehobenen Rollengänge nur bereichsweise abgestützt werden und sich daher unter den transportierten Lasten stark durchbiegen. Die vergleichsweise starren Antriebskonzepte mittels fester Getriebemittel würden hier erwartungsgemäß zu einer kurzen Lebensdauer der eingesetzten Getriebemittel führen, so dass diese nicht für einen wirtschaftlichen Betrieb des Vorfeld-Fahrzeugs geeignet erscheinen und insbesondere nicht in dem gewünschten Maße betriebssicher und wartungsarm wären.

Aus der US 5 011 004, der DE 198 60 703 A1 und aus den Abstracts of Japan, Vol. 008, Nr. 249 (M-338) sind jeweils Rollengänge als Transportgänge bekannt, die mittels fester Antriebsmittel angetriebene Rollen aufweisen, wobei eine Anwendung im Bereich eines Vorfeld-Fahrzeuges nicht aus diesem Stand der Technik bekannt ist. Vielmehr sollen beispielsweise chemisch hochbeständige Einrichtungen geschaffen werden, die in der chemischen Industrie eingesetzt werden können oder es sollen besonders leise arbeitende Fördereinrichtungen geschaffen werden, die im Vergleich zu kettengetriebenen Fördergängen erheblich leiser funktionieren.

Aus der DE 34 16 563 A1 ist ein Antrieb für die Vorschubwalzen einer Holzbearbeitungsmaschine bekannt, der ebenfalls feste Getriebemittel vorsieht, ohne dass die Problemstellungen von Vorfeld-Fahrzeugen in diesem Stand der Technik angesprochen wären oder eine Eignung der in diesem Stand der Technik vorgeschlagenen Technik für den Bereich der Vorfeld-Fahrzeuge erkennbar wäre.

Der Erfindung liegt die Aufgabe zugrunde, ein gattungsgemäßes Vorfeld-Fahrzeug dahingehend zu verbessern, dass dessen Rollengang möglichst preisgünstig herstellbar und dabei möglichst betriebssicher und wartungsarm ist.

Diese Aufgabe wird durch ein Vorfeld-Fahrzeug mit den Merkmalen des Anspruchs 1 gelöst.

Die Erfindung schlägt mit anderen Worten ein Bündel von folgenden Maßnahmen vor:

Die Erfindung schlägt als Erstes vor, an Stelle eines Kettenantriebs feste Getriebemittel vorzusehen, wobei im Rahmen des vorliegenden Vorschlags derartige "feste Getriebemittel" unterschieden werden von "flexiblen Getriebemitteln" wie Ketten- oder Riementrieben. Dabei sind vorschlagsgemäß Zahnräder und Gewindestangen vorgesehen; beide Getriebepartner sind demzufolge fest ausgestaltet, also das zur Rolle zugeordnete und das zum Antrieb zugeordnete Getriebebauteil. Nachfolgend wird rein beispielhaft und stellvertretend für andere feste Getriebemittel ein Schneckenantrieb beschrieben. In überraschender Weise wird durch diese an sich bekannte, für Vorfeld-Fahrzeuge jedoch nicht beachtete Technologie eine erhebliche Verbesserung ermöglicht:

Die zu verwendenden Getriebeelemente sind - obwohl es sich bei den üblicherweise verwendeten Zahnrädern und Ketten um preiswerte, standardisierte und in Großserien hergestellte Bauteile handeln kann - überraschenderweise lediglich etwa gleich teuer oder sogar preisgünstiger als die zur Ausstattung eines vergleichbaren Rollengangs erforderliche Menge an Zahnrädern und Ketten, sodass die vorgeschlagene Konstruktion hinsichtlich der Materialkosten kostenneutral oder sogar vorteilhaft sein kann. Weiterhin ist die Montage z. B. eines Schneckentriebs erheblich einfacher und schneller und aufgrund der Zeitersparnis daher auch wirtschaftlich günstiger als die Montage eines vergleichbar langen Kettentriebs.

Neben diesen Vorteilen für den Hersteller, die durch einen geringeren Preis des Rollengangs und damit des gesamten Vorfeld-Fahrzeugs auch an den Kunden weitergegeben werden können, ergeben sich für den Kunden und Betreiber des Vorfeld-Fahrzeugs wirtschaftliche Vorteile dadurch, dass die Wartung eines Getriebes mit festen Getriebemitteln erheblich weniger Zeit in Anspruch nimmt als die Wartung eines vergleichbaren Kettenantriebs.

Zweitens schlägt die Erfindung vor, an mehreren anzutreibenden Rollen jeweils ein eigenes Zahnrad vorzusehen, welches mit der Gewindestange kämmt. Ggf. kann zugunsten möglichst großer Stückzahlen der verwendeten Bauteile vorgesehen sein, daß beide Getriebepartner gleich ausgestaltet sind, z. B. als Teller- oder Kegelzahnräder oder Schnecken.

Drittens schlägt die Erfindung vor, dass die einzelnen Getriebestellen, wo also eine Umsetzung von der Antriebswelle zur Rolle vorgesehen ist, durch Getriebebaugruppen verwirklicht werden. Die Getriebebaugruppen können vormontiert sein, so daß derartige Getriebebaugruppen in größeren Stückzahlen vorgefertigt und bedarfsweise bei der Herstellung eines Vorfeldfahrzeuges verwendet werden können.

Insbesondere ergibt sich dabei die Möglichkeit, derartige Getriebebaugruppen zu kapseln, also mit einem Gehäuse zu versehen und gegen Verschmutzungen und Witterungseinflüsse zu schützen. Die Getriebebaugruppen weisen einerseits die beiden Getriebepartner auf, also die an die Antriebswelle anschließenden Getriebemittel sowie die an die Rolle anschließenden Getriebemittel und weisen weiterhin entsprechende Anschlußmittel auf, um die Antriebswelle bzw. die Rolle an die Getriebebaugruppe anschließen zu können. Um mit Hilfe mehrerer standardisierter Getriebebaugruppen eine gesamte, durchgehende Antriebswelle herstellen zu können, weist die Getriebebaugruppe nicht nur für die in die Baugruppe hineingehende Antriebswelle derartige Anschlußmittel auf, sondern auch für eine aus der Getriebebaugruppe abgehende Abtriebswelle, welche ihrerseits die Antriebswelle für eine nachgeschaltete Getriebebaugruppe darstellt.

Viertens schlägt die Erfindung vor, dass statt einer durchgehenden Antriebswelle mehrere Abschnitte vorgesehen sind, die ebenfalls in einer oder wenigen standardisierten Längen vorgefertigt und bereitgehalten werden können und die zwischen zwei Getriebebaugruppen eingesetzt werden. Auf diese Weise ergibt sich mit wenigen standardisierten Grundkomponenten die flexible Möglichkeit, Vorfeldfahrzeuge mit Rollengängen unterschiedlicher Länge auszugestalten, ohne entsprechend lange Bauelemente herzustellen oder bevorraten zu müssen.

Schließlich schlägt die Erfindung vor, die einzelnen Abschnitte der insgesamt zu bildenden Antriebswelle zwischen zwei Getriebebaugruppen axial beweglich zu lagern. Auf diese Weise kann bei längeren Rollengängen und hohen aufzunehmenden Lasten eine Durchbiegung des Rollenganges problemlos aufgefangen werden, indem die einzelnen Abschnitte der Antriebswelle in den beiden benachbarten Getriebebaugruppen, in denen jeder derartige Abschnitt endet, axial beweglich ist, so daß nicht nur ein konstruktiver Toleranzausgleich ermöglicht ist, sondern auch bei den beschriebenen Durchbiegungen eine zuverlässige Kraftübertragung an jeder Getriebestelle vorgesehen ist, wo die Antriebskräfte von der Antriebswelle auf die anzutreibende Rolle übertragen werden sollen.

Bei Wartungs- und Reparaturarbeiten kann auf preisgünstige Weise lediglich ein Auswechseln der betreffenden Getriebebaugruppe bzw. des betreffenden Abschnittes der Antriebswelle er-folgen, so daß die Reparaturzeiten und die bei einer Reparatur verursachten Materialkosten möglichst gering gehalten werden können.
Ausführungsbeispiele der Erfindung werden anhand der rein schematischen Zeichnungen nachfolgend näher erläutert. Dabei zeigt
- Fig. 1: bei einem ersten Ausführungsbeispiel eine perspektivische Ansicht von oben auf einen Rollengang eines Vorfeld-Fahrzeugs,
- Fig. 2: eine perspektivische Ansicht von unten unter den Rollengang von Fig. 1,
- Fig. 3: eine perspektivische Ansicht von unten, in gegenüber Fig. 2 vergrößertem Maßstab, mit einigen weggebrochenen Teilen,
- Fig. 4: einen Querschnitt durch eine Gewindestange mit Blick auf ein mit der Gewindestange 5 kämmendes Zahnrad,
- Fig. 5: bei einem zweiten Ausführungsbeispiel eine Draufsicht auf einen Rollengang,
- Fig. 6: in gegenüber Fig. 5 vergrößertem-Maßstab eine Draufsicht auf eine Getriebebox im Bereich einer angetriebenen Rolle,
- Fig. 7: einen Querschnitt in Längsrichtung des Rollenganges der Fig. 5 und 6 gesehen auf die Getriebebox von Fig. 6 und in
- Fig. 8: einen Schnitt in Längsrichtung durch den Rollengang von Fig. 5, mit zwei benachbart angeordneten Getriebeboxen.

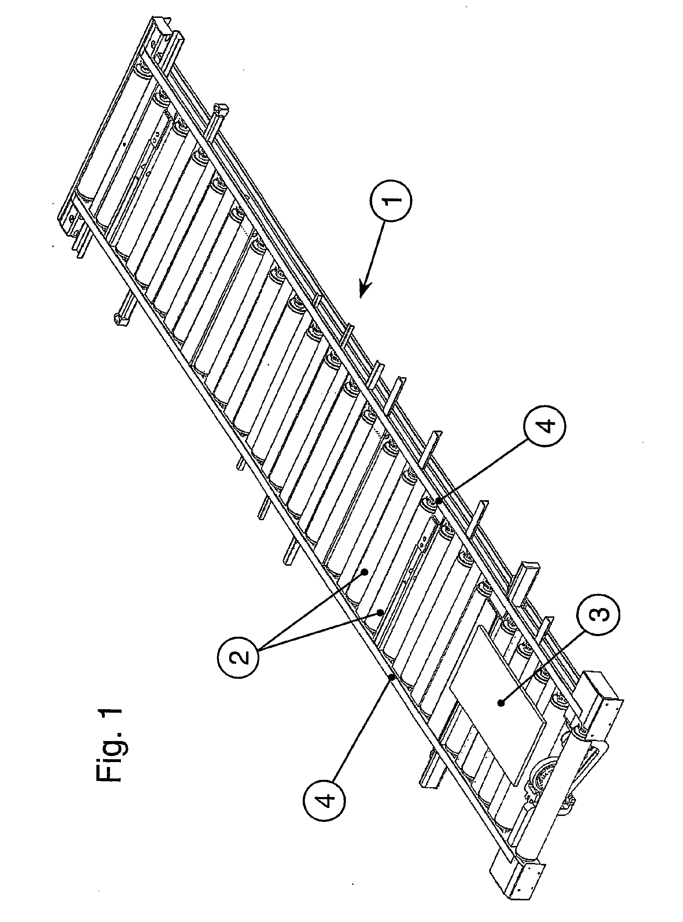

In Fig. 1 ist mit 1 allgemein ein Rollengang bezeichnet, der zur Anordnung an einem Vorfeld-Fahrzeug vorgesehen ist, eine Vielzahl von angetriebenen Rollen 2 aufweist, sowie ein angedeutetes Gepäckstück 3, welches über den Rollengang 1 gefördert werden soll. Die Rollen 2 sind zwischen zwei Längsprofilen 4 angeordnet.

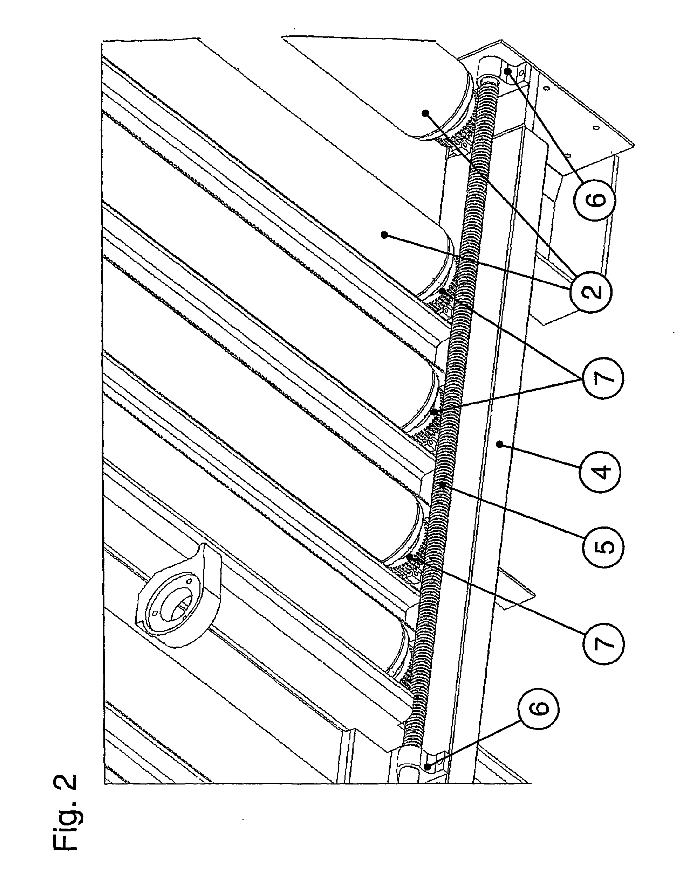

In Fig. 2 ist eines der Längsprofile 4 dargestellt, an welchem sowohl die Rollen 2 seitlich gehalten-sind als auch eine Antriebswelle in Form einer Gewindestange 5, wobei Lagerböcke 6 die Gewindestange 5 an dem Längsprofil 4 halten. Die Lagerböcke 6 können jeweils zweiteilig ausgestaltet sein, sodass sie geöffnet werden können und eine einfache Montage bzw. Demontage der Gewindestange 5 ermöglichen, derart, dass die beiden Teile des Lagerbockes 6 jeweils sich um etwa 180° des Umfangs der Gewindestange 5 erstrecken.

Die Gewindestange 5 treibt die vier dargestellten Rollen 2 an. Zu diesem Zweck ist jede Rolle mit einem Zahnrad 7 versehen, welches auf einem Wellenstumpf der jeweiligen Rolle 2 montiert ist. Zur Aussteifung der Antriebswelle kann vorgesehen sein, dass weitere Lagerböcke 6 vorgesehen sind, beispielsweise zwischen den Zahnrädern 7, um unzulässige Durchbiegungen der Gewindestange 5 zu vermeiden.

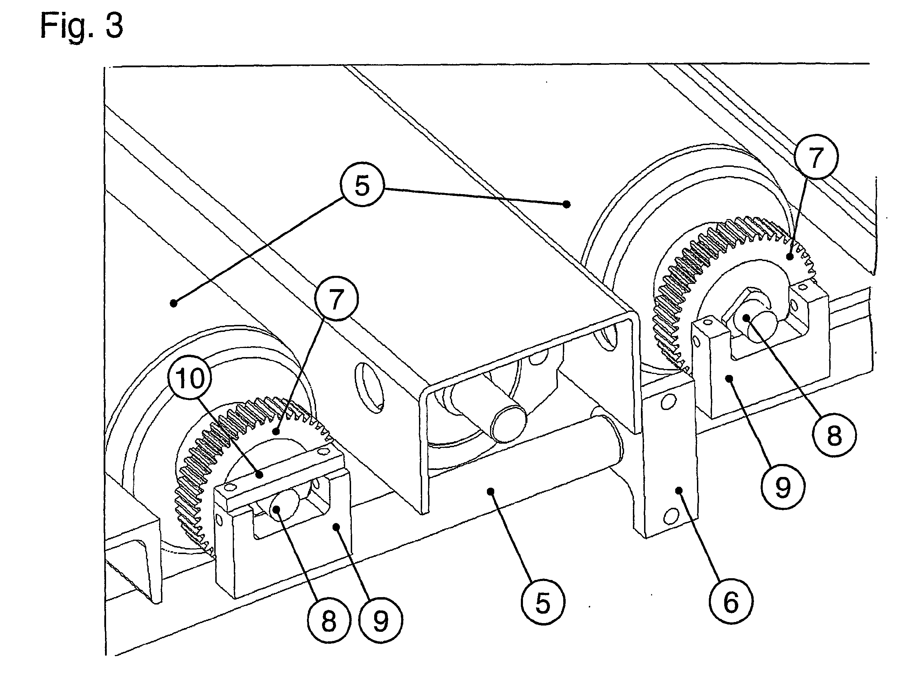

Fig. 3 zeigt eine Ansicht auf die Stirnenden der Rollen 2 bei demontiertem Längsprofil 4. Ein Lagerbock 6 ist ersichtlich, wobei die Gewindestange 5 aus Gründen der zeichnerischen Einfachheit ohne ihr Gewinde dargestellt ist.

Aus Fig. 3 ist ersichtlich, dass die Rollen 2 Wellenstümpfe 8 mit einem nicht kreisrunden Querschnitt aufweisen. Bei dem dargestellten Ausführungsbeispiel weisen die Wellenstümpfe 8, ausgehend von einem zunächst kreisrunden Querschnitt, zwei abgeflachte, parallele Seitenflächen auf. Das Zahnrad 7 weist eine entsprechend konturierte mittlere Ausnehmung auf, mittels welche es auf den Wellenstumpf 8 aufgesteckt ist, sodass aufgrund der Formgebung dieser komplementären Verbindungskonturen eine zuverlässige Kraftübertragung von der Gewindestange 5 auf das Zahnrad 7, auf den Wellenstumpf 8 und somit auf die Rolle 2 sichergestellt ist, um die Rolle 2 anzutreiben.

Ein Rollenlagerblock 9 ist für jedes Ende jeder Rolle 2 vorgesehen, er weist einen oberen Abdecksteg 10 auf. Nach Demontage dieses Abdeckstegs 10 kann die Rolle 2 angehoben werden und das Zahnrad 7 kann auf einfache Weise vom Wellenstumpf 8 abgezogen werden. Auf diese Weise ist eine sehr schnelle und kostengünstige Reparatur verschlissener Zahnräder 7 bzw. defekter Rollen 2 möglich.

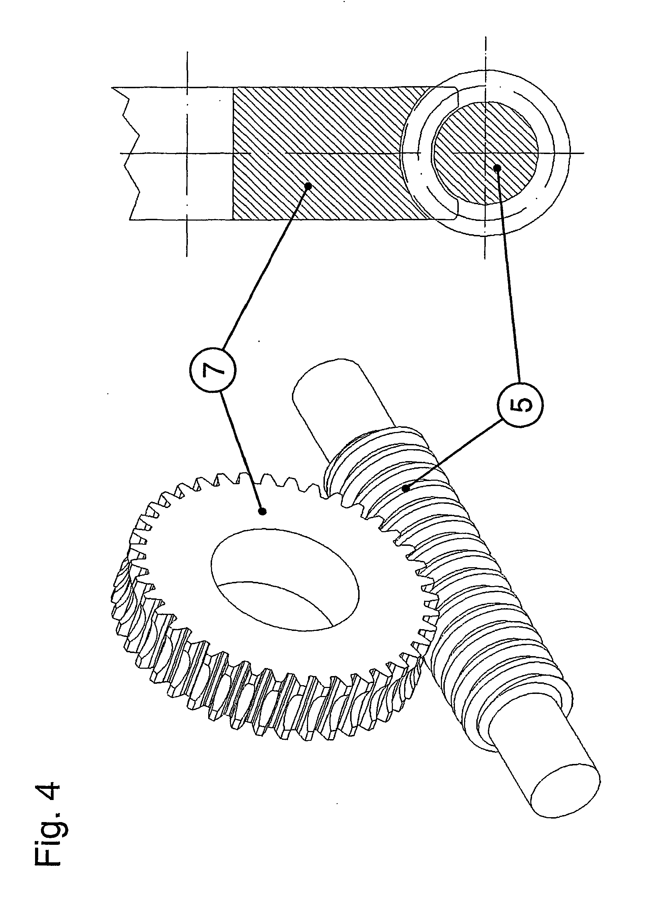

Eine axiale Fixierung des Zahnrades 7 auf dem Wellenstumpf 8 mittels Splinten, Sprengringen oder dergleichen ist nicht erforderlich, sodass die Montage hierdurch begünstigt, vereinfacht und insbesondere beschleunigt wird. Die axiale Führung des Zahnrades 7 auf dem Wellenstumpf 8 erfolgt vielmehr aufgrund der Konturierung der einzelnen Zähne, wie aus Fig. 4 ersichtlich ist:

Fig. 4 zeigt einen Querschnitt durch die Gewindestange 5, also eine Blickrichtung entlang der Längsrichtung der Gewindestange 5 und es ist ersichtlich, dass das mit der Gewindestange 5. kämmende Zahnrad 7 an seinem Außenumfang eine konkave Kontur der Zähne aufweist, sodass das Zahnrad 7 die Gewindestange 5 teilweise umgreift. Kräfte, welche das Zahnrad 7 in axialer Richtung auf dem Wellenstumpf 8 zu verschieben bestrebt sind, also quer zur Gewindestange 5, werden automatisch dadurch ausgeglichen, dass das Zahnrad 7 auf dem Wellenstumpf 8 in axialer Richtung frei beweglich ist und daher aufgrund der vorgesehenen Konturierung stets optimal der Gewindestange 5 anliegt.

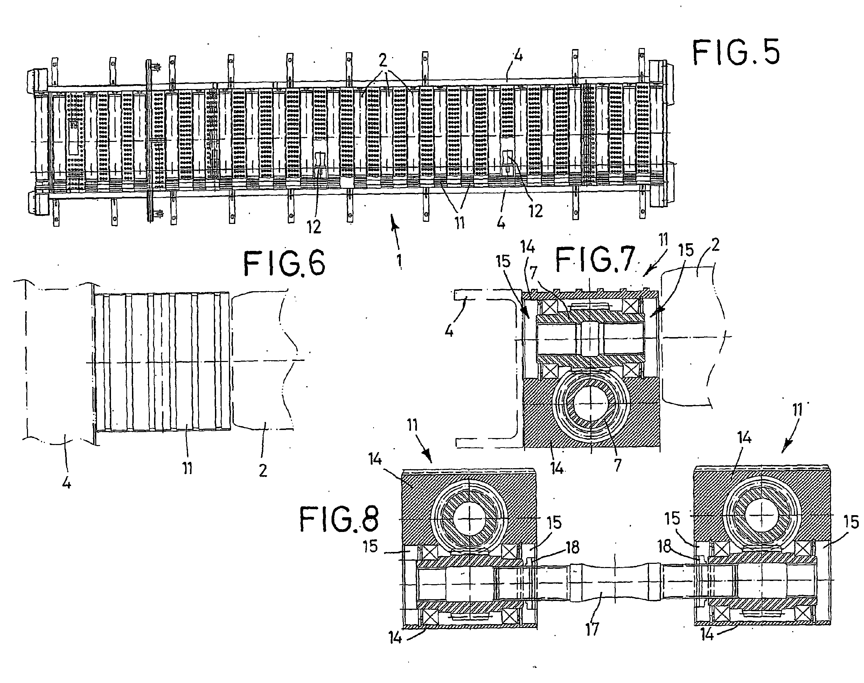

In Fig. 5 ist ein zweites Ausführungsbeispiel eines Rollenganges 1 in einer Draufsicht dargestellt, wobei eine Vielzahl von Rollen 2 ersichtlich sind, die zwischen zwei Längsprofilen 4 gelagert sind. Die Rollen 2 sind jeweils an einem Ende, in der Zeichnung unten dargestellt, mittels einer Getriebebox an eine Antriebswelle angeschlossen, so daß diese Rollen 2 angetrieben sind. Um über die Länge des Rollenganges 1 die Antriebskräfte für die Vielzahl von Rollen 2 möglichst gleichmäßig verteilt einbringen zu können, sind mehrere Antriebsmotoren 12 vorgesehen.

Fig. 6 zeigt in einem gegenüber Fig. 5 größerem Maßstab einen Ausschnitt aus dem Längsträger 4, der in Fig. 5 unten dargestellt ist, wobei sich an den Längsträger 4 die Getriebebox 11 anschließt und an diese wiederum die durch das Getriebe angetriebene Rolle 2.

Fig. 7 zeigt einen Querschnitt durch den Rollengang 1 und durch die Getriebebox 11: Die Getriebebox 11 weist einerseits ein Zahnrad 7 auf, welches mit der Rolle 2 wirksam verbunden ist, beispielsweise mit einem aus Übersichtlichkeitsgründen nicht dargestellten Wellenstumpf der Rolle 2 zusammenwirkt. Weiterhin weist die Getriebebox 11 ein zweites, gleichartiges Zahnrad 7 auf, wobei die beiden Zahnräder 7 rein schematisch dargestellt und lediglich verallgemeinernd als "Zahnrad" bezeichnet sind. Es kann sich dabei um Zahnräder, Schnecken oder ähnliche Getriebeelemente handeln, welche die gewünschte Richtungsänderung-des Kraftflusses von der Antriebswelle zur Rolle ermöglichen. Die beiden Zahnräder 7 innerhalb der Getriebebox 11 können auch abweichend von dem dargestellten Ausführungsbeispiel unterschiedlich ausgestaltet sein. Die bei dem dargestellten Ausführungsbeispiel gleiche Ausgestaltung beider Zahnräder 7 ermöglicht durch die dementsprechend höheren Stückzahlen eine möglichst wirtschaftliche Herstellung der Getriebebox 11 und vereinfacht die Lagerhaltung.

Die Getriebebox 11 weist ein Gehäuse 14 auf, so daß die innerhalb dieses Gehäuses 14 vorgesehene Getriebe-Baugruppe gegen mechanische Einflüsse und gegen Verschmutzungen sowie Witterungseinflüsse geschützt ist. Das Gehäuse 14 weist Öffnungen 15 auf, durch welche die Zahnräder 7 zugänglich sind. Die Zahnräder 7 weisen Einsteckbohrungen auf, welche einen vom kreisrund abweichenden Querschnitt aufweisen und beispielsweise als Vierkant oder Vielfachverzahnung ausgestaltet sind. Die Einsteckbohrungen dienen als Anschlußmittel zur Verbindung des jeweiligen Zahnrades 7 mit entweder einer Rolle 2 bzw. deren Wellenstumpf oder zum Anschluß an eine Antriebswelle.

Die beiden Zahnräder 7 können als Kegel- oder Schraubenrad oder als Schnecke od. dgl. ausgestaltet sein, so daß die verwendete Bezeichnung "Zahnrad" lediglich stellvertretend und verallgemeinernd im Rahmen des vorliegenden Vorschlages benutzt wird.

Fig. 8 zeigt die Getriebebox 11 der Fig. 6 und 7 zusammen mit einer benachbarten, gleichartigen Getriebebox 11, und zwar in einem Schnitt, welcher in Längsrichtung durch den Rollengang 1 verläuft, also parallel zu den Längsprofilen 4 und dementsprechend auch parallel zu der auf der Oberseite der Getriebeboxen 11 vorgesehenen Verrippung.

Die Antriebswelle für den Rollengang 1 ist als durchgehend Antriebswelle ausgestaltet, jedoch im Gegensatz zum Ausführungsbeispiel der Fig. 1 nicht einstückig, sondern sie ist aus mehreren Wellenabschnitten 17 sowie aus den Getriebeboxen 11 gebildet. Jeder Wellenabschnitt 17 ist dabei in die gegenüberliegenden Einsteckbohrungen zweier benachbarter Getriebeboxen 11 eingeführt, wobei sich der Wellenabschnitt 17 nicht über die gesamte Tiefe in die Einsteckbohrung erstreckt. Hierdurch ist einerseits gewährleistet, daß sich der Wellenabschnitt 17 axial innerhalb der Einsteckbohrung und damit innerhalb des entsprechenden Zahnrades 7 bewegen kann. Bei einer Durchbiegung des Rollenganges 1 können so die Bewegungen der einzelnen Getriebeboxen 11 gegeneinander problemlos durch die entsprechend beweglich gelagerten Wellenabschnitte 17 aufgefangen werden, ohne daß es zu einer unerträglichen Belastung der Antriebswelle oder der Getriebebaugruppen kommt.

Die Beweglichkeit des Wellenabschnittes 17 zwischen zwei benachbarten Getriebeboxen 11 wird behindert durch Stellringe 18. Nach Lösen der Stellringe 18 kann der Wellenabschnitt 17 so weit in eine der beiden Einsteckbohrungen eingeführt werden, daß er mit seinem gegenüberliegenden Ende aus der dortigen Getriebebox 11 freikommt. Auf diese Weise kann ein Wellenabschnitt 17 ausgetauscht werden ohne die benachbarten Getriebeboxen 11 oder noch weitere Teile der gesamten Antriebswelle demontieren zu müssen. Reparaturen der Antriebswelle können daher auf die jeweils betroffenen Abschnitte beschränkt werden und somit zeit- und kostengünstig durchgeführt werden.

Durch beliebige Aneinanderreihung einer Vielzahl von Wellenabschnitten 17 und Getriebeboxen 11 können Rollengänge mit nahezu beliebiger Länge erstellt werden, und zwar preisgünstig unter Verwendung jeweils gleicher, standardisierter Bauteile. Lediglich wenn unterschiedliche Rollenabstände gewünscht sind, sind andere Bauelemente erforderlich, beispielsweise Wellenabschnitte 17 mit entsprechender Länge.

## Patentansprüche

1. Vorfeld-Fahrzeug, zur Handhabung von Gütern auf dem Vorfeld eines Flughafens - wie ein Loader, Transporter, Hub-Transporter oder Dolly,
mit einem Rollengang als Förderbahn für die Güter, wobei wenigstens eine Rolle antreibbar ist, wobei
■ der Antrieb der Rolle (2) mittels fester Getriebemittel erfolgt,
■ mehrere angetriebene Rollen (2) mit jeweils eigenen Zahnrädern (7) vorgesehen sind,
■ diese Zahnräder (7) mit einer als Gewindestange (5) ausgestalteten Antriebswelle kämmen, **dadurch gekennzeichnet dass**
■ zum Antrieb der Rolle (2) eine Getriebe-Baugruppe vorgesehen ist, welche einerseits Anschlußmittel für die Rolle (2) und andererseits Anschlußmittel für eine Antriebs- sowie eine Abtriebswelle aufweist, und
■ zwischen zwei Getriebe-Baugruppen ein Abschnitt der Antriebswelle vorgesehen ist, welcher axial beweglich gelagert ist.

2. Vorfeld-Fahrzeug nach Anspruch 1, **dadurch gekennzeichnet, dass** die gemeinsame Antriebswelle lediglich abschnittsweise mit einem Gewinde versehen ist.

3. Vorfeld-Fahrzeug nach Anspruch 1 oder 2, **dadurch gekennzeichnet, dass** das Zahnrad (7) lösbar auf einem Wellenstumpf der Rolle (2) montiert ist.

4. Vorfeld-Fahrzeug nach Anspruch 3, **dadurch gekennzeichnet, dass** das Zahnrad (7) eine konkave Umfangskontur aufweist, welche die Gewindestange (5) teilweise umgreift.

5. Vorfeld-Fahrzeug nach einem der vorhergeheden Ansprüche, **dadurch gekennzeichnet, dass** die festen Getriebemittel als Schneckengetriebe ausgestaltet sind,
mit einem Übersetzungsmodul, welches nach einer Umdrehung des Zahnrades (7) einen anderen Zahn mit demselben Gewindegang der Gewindestange (5) in Eingriff kommen lässt.

6. Vorfeld-Fahrzeug nach Anspruch 4, **dadurch gekennzeichnet, dass** das Zahnrad (7) ohne axiale Fixierung auf dem Wellenstumpf montiert ist.

7. Vorfeld-Fahrzeug nach Anspruch 3, **dadurch gekennzeichnet, dass** das Zahnrad (7) und der Wellenstumpf miteinander korrespondierende, vom Kreisrund abweichende Verbindungskonturen aufweisen.

8. Vorfeld-Fahrzeug nach einem der vorhergehenden Ansprüche, **dadurch gekennzeichnet, dass** jeder Gewindestange (5) ein eigener Antriebsmotor zugeordnet ist.

9. Vorfeld-Fahrzeug nach einem der vorhergehenden Ansprüche, **dadurch gekennzeichnet, dass** ein Antriebsmotor vorgesehen ist, welcher etwa mittig entlang der Länge der Gewindestange (5) diese antreibt.

10. Vorfeld-Fahrzeug nach einem der Ansprüche 1 bis 8, **dadurch gekennzeichnet, dass** ein Antriebsmotor vorgesehen ist, welcher die Gewindestange (5) an einem ihrer beiden Enden antreibt.

11. Vorfeld-Fahrzeug nach einem der vorhergehenden Ansprüche, **dadurch gekennzeichnet, dass** auch zum Antrieb weiterer Bewegungen des Fahrzeugs - wie zum Heben und / oder Senken einer Ladeplattform - ein Gewindetrieb vorgesehen ist.

12. Vorfeld-Fahrzeug nach einem der vorhergehenden Ansprüche, **dadurch gekennzeichnet, dass** die Getriebe-Baugruppe innerhalb eines Gehäuses angeordnet ist.

13. Verwendung eines Rollengangs als Förderbahn für Güter,
wobei wenigstens eine Rolle antreibbar ist,
und wobei der Antrieb der Rolle (2) mittels fester Getriebemittel - wie mittels einer Verzahnung, eines Schneckengetriebes, Rollengewindetriebes oder eines gewindegetriebenen Linearantriebs - erfolgt,
bei einem Vorfeld-Fahrzeug, nach einem der Ansprüche 1-12, welches zur Handhabung von Gütern auf dem Vorfeld eines Flughafens dient - wie bei einem Loader, Transporter, Hub-Transporter oder Dolly.

## Claims

1. Apron vehicle for handling cargo on the apron of an airport, such as a loader, transporter, lifting transporter or dolly, comprising a roller conveyor serving as a conveyor belt for the cargo, wherein at least one roller can be driven, the roller (2) is driven by means of fixed drive means, several driven rollers (2) are each provided with their own gears (7) and these gears (7) mesh with a drive shaft designed as a threaded rod (5), **characterised in that** a gear unit provided, on the one hand, with connecting means for the roller (2) and, on the other hand, with connecting means for a drive shaft and an output shaft is provided to drive the roller (2) and a portion of the drive shaft supported in an axially movable manner is provided between two gear units.

2. Apron vehicle according to claim 1, **characterised in that** the common drive shaft is provided only in some portions with a thread.

3. Apron vehicle according to claim 1 or claim 2, **characterised in that** the gear (7) is removably mounted on a shaft end of the roller (2).

4. Apron vehicle according to claim 3, **characterised in that** the gear (7) has a concave circumferential contour which partly surrounds the threaded rod (5).

5. Apron vehicle according to one of the preceding claims, **characterised in that** the fixed drive means are designed as a worm gear, with a transmission module which, following rotation of the gear (7), allows another tooth to mesh with the same thread of the threaded rod (5).

6. Apron vehicle according to claim 4, **characterised in that** the gear (7) is mounted on the shaft end without axial fixing.

7. Apron vehicle according to claim 3, **characterised in that** the gear (7) and the shaft end have corresponding non-circular connecting contours.

8. Apron vehicle according to one of the preceding claims, **characterised in that** a separate drive motor is associated with each threaded rod (5).

9. Apron vehicle according to one of the preceding claims, **characterised by** a drive motor which drives the threaded rod (5) approximately centrally along its length.

10. Apron vehicle according to one of claims 1 to 8, **characterised by** a drive motor which drives the threaded rod (5) at one of its two ends.

11. Apron vehicle according to one of the preceding claims, **characterised in that** a screw drive is also provided to drive further movements of the vehicle, such as to raise and/or lower a loading platform.

12. Apron vehicle according to one of the preceding claims, **characterised in that** the drive unit is arranged within a housing.

13. Use of a roller conveyor as a conveyor belt for cargo, wherein at least one roller can be driven and the roller (2) is driven by means of fixed drive means, such as by means of toothing, a worm gear, a roller screw drive or a screw-driven linear drive, in an apron vehicle according to one of claims 1 to 12 serving to handle cargo on the apron of an airport, such as a loader, transporter, lifting transporter or dolly.

## Revendications

1. Véhicule d'aire de stationnement destiné à la manutention de marchandises sur une aire de stationnement d'un aéroport, notamment un chargeur, un transporteur, un chariot élévateur ou un chariot pour conteneurs, pourvu d'une ligne de convoyage conçue en tant que dispositif de transport pour les marchandises, dans lequel au moins un rouleau peut être entraîné, dans lequel l'entraînement du rouleau (2) s'effectue au moyen de moyens d'entraînement fixes,
plusieurs rouleaux entraînés (2) ont respectivement leurs propres roues dentées (7),
ces roues dentées (7) sont pourvues d'un arbre d'entraînement conçu comme une tige filetée (5),
**caractérisé en ce qu'**un ensemble d'engrenage, qui présente d'une part des moyens de connexion pour les rouleaux (2) et d'autre part des moyens de connexion pour les arbres d'entraînement et de sortie, est prévu pour l'entraînement du rouleau (2) et **en ce qu'**une section de l'arbre d'entraînement, qui est agencée de manière mobile axialement, est prévue entre deux ensembles d'engrenage.

2. Véhicule d'aire de stationnement selon la revendication 1, **caractérisé en ce que** l'arbre d'entraînement commun est également pourvu d'un filetage par section.

3. Véhicule d'aire de stationnement selon la revendication 1 ou 2, **caractérisé en ce que** la roue dentée (7) est montée de manière amovible sur un tronçon d'arbre du rouleau (2).

4. Véhicule d'aire de stationnement selon la revendication 3, **caractérisé en ce que** la roue dentée (7) présente un contour concave, qui entoure partiellement la tige filetée (5).

5. Véhicule d'aire de stationnement selon l'une quelconque des revendications précédentes, **caractérisé en ce que** les moyens d'engrenage fixes sont conçus comme des engrenages à vis sans fin, avec un module de transmission, qui laisse se mettre en prise, après un tour de la roue dentée (7), une autre dent avec le même pas de vis de la tige filetée (5).

6. Véhicule d'aire de stationnement selon la revendication 4, **caractérisé en ce que** la roue dentée (7) est montée sans fixation axiale sur le tronçon d'arbre.

7. Véhicule d'aire de stationnement selon la revendication 3, **caractérisé en ce que** la roue dentée (7) et le tronçon d'arbre présentent des contours de connexion non circulaires, correspondant entre eux.

8. Véhicule d'aire de stationnement selon l'une quelconque des revendications précédentes, **caractérisé en ce qu'**un moteur d'entraînement spécifique est associé à chaque tige filetée (5).

9. Véhicule d'aire de stationnement selon l'une quelconque des revendications précédentes, **caractérisé en ce qu'**un moteur d'entraînement est prévu, lequel entraîne la tige filetée (5) à peu près de manière axée le long de la longueur de celle-ci.

10. Véhicule d'aire de stationnement selon l'une des revendications 1 à 8, **caractérisé en ce qu'**un moteur d'entraînement est prévu, lequel entraîne la tige filetée (5) au niveau d'une de ses deux extrémités.

11. Véhicule d'aire de stationnement selon l'une quelconque des revendications précédentes, **caractérisé en ce qu'**un entraînement fileté est également prévu pour l'actionnement d'autres mouvements du véhicule, notamment pour le levage et/ou l'abaissement d'une plate-forme de chargement.

12. Véhicule d'aire de stationnement selon l'une quelconque des revendications précédentes, **caractérisé en ce que** l'ensemble d'engrenage est disposé à l'intérieur d'un boîtier.

13. Utilisation d'une ligne de convoyage en tant que dispositif de transport pour des marchandises, dans lequel un rouleau peut être entraîné, et dans lequel l'entraînement du rouleau (2) s'effectue au moyen de moyens d'engrenage fixes, tels qu'une denture, un engrenage à vis sans fin, un entraînement à filetage à rouleaux ou un entraînement linéaire entraîné par filetage, pour un véhicule d'aire de stationnement selon l'une des revendications 1 à 12, qui sert à la manutention de marchandises sur l'aire de stationnement d'un aéroport, tel qu'un chargeur, un transporteur, un chariot élévateur ou un chariot pour conteneurs.
